# EUROPÄISCHE PATENTSCHRIFT

(11) **EP 1 252 539 B1**
(45) Veröffentlichungstag und Bekanntmachung des Hinweises auf die Patenterteilung: **23.03.2005**
(21) Anmeldenummer: 01913538.3
(22) Anmeldetag: 26.01.2001
(51) Int. Cl.: G02B 6/36

(54) **IMMERSIONSMITTEL, KOPPLUNGSANORDNUNG UND KOPPLUNGSVERFAHREN FÜR LICHTWELLENLEITER**
IMMERSION AGENT, COUPLING DEVICE AND METHOD FOR COUPLING AN OPTICAL WAVEGUIDE
AGENT D'IMMERSION, SYSTEME DE COUPLAGE ET PROCEDE DE COUPLAGE POUR GUIDES D'ONDES OPTIQUES

(30) Priorität: 02.02.2000 DE 10004396
(43) Veröffentlichungstag der Anmeldung: 30.10.2002
(73) Patentinhaber: Corning Incorporated, Corning, New York 14831 (US)
(72) Erfinder: SCHWEIKER, Wolfgang, 83629 Weyarn (DE); RIEF, Angela, 80799 München (DE); ZEIDLER, Günter, 82110 Germering (DE); DEUTSCH, Bernhard, Hickory, North Carolina 28601 (US)
(74) Vertreter: Kühn, Armin
(86) Internationale Anmeldenummer: PCT/DE2001/000331
(87) Internationale Veröffentlichungsnummer: WO 2001/057563

(56) Entgegenhaltungen:
- EP-A- 0 859 255
- WO-A-98/25862
- WO-A-98/57209
- DE-C- 4 424 013
- US-A- 4 324 575
- US-A- 4 601 535
- US-A- 5 077 821
- HALL I P: "NON-HERMETIC ENCAPSULATION AND ASSEMBLY TECHNIQUES FOR OPTOELECTRONIC APPLICATIONS" EUROPEAN MICROELECTRONICS CONFERENCE, XX, XX, 14. Mai 1995 (1995-05-14), Seiten 62-73, XP000605653

## Beschreibung

Die Erfindung betrifft ein Immersionsmittel, eine Kopplungsanordnung sowie ein Verfahren zur Kopplung mindestens eines Lichtwellenleiters (LWL) an ein optisches Bauelement (Chip) bzw. zur Verbindung eines LWL mit einem optischen Bauelement nach den Ansprüchen 1, 12 bzw. 15.

Ein wie Eingangs genanntes Immersionsmittel, eine Kopplungsanordnung sowie Verfahren zur Kopplung eines LWL an ein optisches Bauelement sind aus der EP 0 859 255 A2 und der US 5, 077, 821 bekannt.
Eine optische Kopplungsanordnung dient dem Ein- oder Überkoppeln von Licht zwischen zwei Lichtwellenleiter-Endflächen, beispielsweise zwischen der Endfläche einer aus Kern und Mantel bestehenden LWL-Faser und der gegenüberliegenden Endfläche einer auf einem Chip vorhandenen Wellenleiterstruktur. Derartige Kopplungsanordnungen werden beispielsweise in optischen Filtern eingesetzt, welche nach dem Phased-Array-Prinzip arbeiten. Diese besitzen eine Einkoppelfläche, in die Licht an einer bestimmten Stelle eintritt, wobei die Ausgangswellenlänge des optischen Filters von der geometrischen Position der Einkoppelstelle abhängt. Nach dem Phased-Array-Prinzip arbeitende optische Filter werden insbesondere als Multiplexer oder Demultiplexer im Bereich der optischen Nachrichtenübertragung eingesetzt, da sie eine geringe Einfügedämpfung und eine hohe Nebensprechunterdrückung aufweisen.

Die deutsche Patentanmeldung DE 44 22 651.9 beschreibt ein sog. Phased-Array-Filter, dessen Mittelwellenlänge durch Positionieren der das Licht in die Chip-Wellenleiterstruktur einkoppelnden LWL-Faser festgelegt und damit genau justiert werden kann. Dies geschieht durch Verschiebung der Wellenleiterendflächen relativ zueinander.

Es wurde bereits vorgeschlagen, die Position der Endfläche des LWL gegenüber der Einkoppelfläche des Chips dadurch zu verändern, dass ein längenveränderliches Element die Faser trägt und diese dadurch parallel zu der Ausdehnungsrichtung des längenveränderlichen Elements verschoben wird.

Um eine optische Kopplung zwischen einem LWL, einem LWL-Bändchen oder Faserarray und einem aktive und/oder passive Elemente enthaltenden optischen Bauelement zu realisieren, müssen die LWL in einer definierten Position bezüglich der Einkoppelfläche des Chips gehalten und mit der entsprechenden Wellenleiterstruktur verbunden werden. Dies erfolgt gewöhnlich durch direktes Verkleben der Faserenden mit dem Chip. In den oben genannten Fällen ist jedoch eine direkte Verklebung oder Verschweißung der Faserenden mit dem Chip nicht erwünscht, da dies die erforderliche Relativbewegung zwischen der Faser und dem Chip verhindern würde. Um die Einfügedämpfung zu verbessern und die Leistungsschwankungen zu verringern hat man bisher ein Immersionsmittel zwischen Faser und Chip eingebracht. Als Immersionsmittel findet insbesondere ein beständiges Gel, beispielsweise ein additionsvernetzter Silikonkautschuk Verwendung. Der Silikonkautschuk besteht dabei aus zwei Komponenten, deren Mischungsverhältnis 1:1 beträgt, so dass der Kautschuk nach dem Einbringen völlig aushärtet. Das Aushärten wird für notwendig erachtet, um ein Wegfließen der Immersion zu verhindern.

Da sich zwischen der Faser und ihrer Faserhalterung einerseits und dem Chip andererseits ein abgeschlossenes Volumen ausgebildet, entstehen im Immersionsgel beim Abkühlen durch Schrumpfung Risse beziehungsweise Vakuolen (Vakuumbläschen), welche die Einfügedämpfung des Bauteils deutlich erhöhen. Zusätzlich gefördert wird die Rissbildung noch durch die oben erwähnte Relativbewegung zwischen Faser und Chip.

Der Erfindung liegt daher die Aufgabe zugrunde, eine eine niedrige Einfügedämpfung aufweisende optische Kopplung zwischen einem Lichtwellenleiter, beispielsweise einer Faser oder einem Faserarray, und einem optischen Bauelement/Chip bereitzustellen.

Zur Lösung dieser Aufgabe ist ein Immersionsmittel zur Kopplung von Lichtwellenleitern mit einem optischen Chip dadurch gekennzeichnet, dass ein transparentes Elastomere als Immersionsmittel dient, wobei die Reißdehnung des Elastomers größer ist als 300% und sein Elastizitätsmodul einen Wert kleiner als 200 N/cm² aufweist. Die Immersion ist daher so weich eingestellt, dass im Fall einer Abkühlung genügend Gel aus den Randbereichen der Immersion nachfließt und sich keine zu Rissen und Vakuolen führende Spannungen aufbauen können. Andererseits ist das Immersionsmaterial nicht so flüssig, dass es aus dem zwischen Lichtwellenleiter und Chip vorhandenen Volumen ausfließen kann, so dass sichergestellt ist, dass das Immersionsmaterial während der gesamten Lebensdauer des Bauteils in diesem Zwischenraum verbleibt.

Eine vorteilhafte Ausgestaltung des erfindungsgemäßen Immersionsmittels ist dadurch gekennzeichnet, dass die Matrix des Immersionsmittels einen nicht vernetzten Anteil an Flüssigphase enthält. Durch entsprechende Einstellung des Mischungsverhältnisses, beispielsweise eines Zweikomponenten-Immersionsmittels, kann somit das Immersionsmittel in der gewünschten Weise weich eingestellt werden.

Eine weitere vorteilhafte Ausgestaltung des erfindungsgemäßen Immersionsmittels ist dadurch gekennzeichnet, dass das Immersionsmittel einen Flüssigphasenanteil von 1 bis 10% einer Immersionsflüssigkeit mit niedrigem Dampfdruck enthält. Die Zugabe eines Flüssigphasenanteils ist eine einfache Alternative zur Erzeugung eines Immersionsmittels mit den eingangs erwähnten Eigenschaften.

Eine weitere vorteilhafte Ausgestaltung des erfindungsgemäßen Immersionsmittels ist dadurch gekennzeichnet, dass als Immersionsflüssigkeit ein Immersionsöl oder ein in Abhängigkeit von dem Elastomere gewählter Weichmacher dient, wobei das Immersionsmittel auf einfache Weise durch Zugabe des Immersionsöls einstellbar ist.

Eine weitere vorteilhafte Ausgestaltung des erfindungsgemäßen Immersionsmittels ist dadurch gekennzeichnet, dass das Immersionsmittel Silikonkautschuk ist, und dass die Immersionsflüssigkeit ein Silikon-Weichmacher, insbesondere Silikonöl, ist. Da der Silikonkautschuk eine ausgeprägte Klebrigkeit auch im nicht vollständig vernetzten Zustand besitzt, ist eine Stabilität der Kopplung des Bauteils über seine gesamte Lebensdauer gewährleistet.

Eine weitere vorteilhafte Ausgestaltung des erfindungsgemäßen Immersionsmittels ist dadurch gekennzeichnet, dass das Immersionsmittel Epoxyacrylat ist, und dass die Immersionsflüssigkeit ein Epoxyacrylat-Weichmacher, insbesondere Polyisobutylen, ist.

Eine weitere vorteilhafte Ausgestaltung des erfindungsgemäßen Immersionsmittels ist dadurch gekennzeichnet, dass das Immersionsmittel Urethanacrylat ist, und dass die Immersionsflüssigkeit ein Urethanacrylat-Weichmacher, insbesondere Polyisobutylen, ist.

Bei den beiden zuletzt genannten Immersionsmitteln handelt es sich um sogenannte strahlungsvernetzende Elastomere, die eine vorteilhafte Alternative zu Silikonkautschuk darstellen. Auch diese Immersionsmittel können die von dem erfindungsgemäßen Immersionsmittel geforderten Eigenschaften haben.

Eine weitere vorteilhafte Ausgestaltung des erfindungsgemäßen Immersionsmittels ist dadurch gekennzeichnet, dass die Immersionsflüssigkeit oder der Weichmacher ein aliphatisches oder aromatisches Öl ist, so dass eine Reihe von Weichmachern zur Verfügung steht, wobei der spezielle Weichmacher nach den jeweiligen Randbedingungen ausgewählt werden kann.

Eine weitere vorteilhafte Ausgestaltung des erfindungsgemäßen Immersionsmittels ist dadurch gekennzeichnet, dass der Silikonkautschuk aus zwei Komponenten besteht, wobei das Mischungsverhältnis der Komponenten 0,5:1 bis 0,9:1 beträgt. Bei Silikonkautschuk, beispielsweise bei dem Silikonkautschuk WACKER SilGel® 612 der Fa. Wacker-Chemie GmbH, wird ein Mischungsverhältnis der Komponenten von 1:1 empfohlen, um eine vollständige Vernetzung des Silikonkautschuks zu erreichen. Wenn dieses Mischungsverhältnis in der angegebenen Weise geändert wird, wird ein Silikonkautschuk erhalten, der die erfindungsgemäß geforderte Weichheit besitzt.

Eine weitere vorteilhafte Ausgestaltung des erfindungsgemäßen Immersionsmittels ist dadurch gekennzeichnet, dass das Immersionsmittel eine Klebekraft pro Fläche größer als die Hälfte der Materialbruchspannung des Elastomers aufweist, wobei in vorteilhafter Weise sichergestellt wird, dass das Immersionsmittel sich bei einem Schrumpfungsprozess nicht von den Kopplungsfläche der Faser beziehungsweise des Chips ablöst.

Eine weitere vorteilhafte Ausgestaltung des erfindungsgemäßen Immersionsmittels ist dadurch gekennzeichnet, dass der Einfrierpunkt/Glasübergangspunkt des Immersionsmittels T_{g} unterhalb von 0°C liegt. Dadurch wird in vorteilhafter Weise erreicht, dass das Immersionsmittel über dem gesamten Betriebstemperaturbereich der Kopplung die gewünschten elastischen Eigenschaften aufweist.

Eine weitere vorteilhafte Ausgestaltung des erfindungsgemäßen Immersionsmittels ist dadurch gekennzeichnet, dass der Brechungsindex des Immersionsmittels einen Wert zwischen n = 1,3 und n= 1,7, insbesondere zwischen n = 1,4 und n = 1,5, aufweist. Durch diese Wahl des Brechungsindexes wird die Kopplungsanordnung optimal auf die Brechungsindizes der Fasern beziehungsweise des Chips abgestimmt und die Kopplungsdämpfung entsprechend reduziert.

Zur Lösung der oben genannten Aufgabe ist eine Anordnung zur Kopplung von Lichtwellenleitern, beispielsweise optischen Fasern oder einem Faserarray, mit einem optischen Bauelement /Chip dadurch gekennzeichnet, dass
(a) ein Immersionsmittel der oben genannten Art verwendet wird, dass
(b) der Abstand von einer Endfläche des Lichtwellenleiters zu einer Kopplungsfläche des Chips 2µm bis 20µm beträgt, und dass
(c) das Volumen des an der Kopplungsstelle angebrachten Immersionsmittels kleiner als 5ul beträgt.

Bei Versuchen hat sich gezeigt, dass sowohl die Eigenschaften des Immersionsmittels als auch die räumlichen Verhältnisse im Bereich der Kopplungsanordnung, also insbesondere der Abstand der Lichtwellenleiter von der Kopplungsfläche des Chips und das Volumen an Immersionsmittel, die Güte der Kopplung und die Lebensdauer der Kopplungsanordnung beeinflusst. Die Bildung von Rissen beziehungsweise Vakuolen kann durch diese Anordnung in vorteilhafter Weise weiter verringert werden, wenn der Abstand einer Kopplungsfläche des Lichtwellenleiters zu der Kopplungsfläche des Chips zwischen 2µm und 20µm liegt, und wenn das Volumen des an der Kopplungsstelle angebrachten Immersionsmittels unter 5µl liegt. Wenn der Abstand zwischen den Kopplungsflächen kleiner als 2µm ist, besteht die Gefahr, dass sich die Kopplungsflächen berühren oder dass die Reibung zwischen den Kopplungsflächen so groß ist, dass sich das Immersionsmittel von den Kopplungsflächen löst. Wenn der Abstand größer als 20µm ist, nimmt die Dämpfung durch das Immersionsmittel erheblich zu. Andererseits wird durch Einhalten dieser Parameter sichergestellt, dass bei einem Schrumpfungsprozess genügend Immersionsmittel von außen in den Raum zwischen den Kopplungsflächen einfließen kann, so dass die Vakuolenbildung vermieden wird.

Eine weitere vorteilhafte Ausgestaltung der erfindungsgemäßen Anordnung, wobei die Lichtwellenleiterfaser zur Kopplung in einer Ferrule angeordnet ist, ist dadurch gekennzeichnet, dass die Faser in einer Ferrule gehalten ist und dass die Ferrule an ihrer Stirnseite einen reduzierten Durchmesser aufweist, und dass die Kopplungsfläche des Chips ebenfalls reduziert ist. Auf diese Weise wird erreicht, dass der Abstand von dem Randbereich des Volumens zwischen den beiden Kopplungsflächen und der Mitte dieses Bereiches kleiner wird, so dass das Gel bei einem Schrumpfungsprozess eventuell auftretende Spannungen besser und schneller ausgleichen kann, um Risse und Vakuolenbildung zu vermeiden.

Eine weitere vorteilhafte Ausgestaltung der erfindungsgemäßen Anordnung ist dadurch gekennzeichnet, dass die Kopplungseinrichtung von einer Vergussmasse umgeben ist, die die gleichen Bestandteile wie das Immersionsmaterial hat, jedoch härter eingestellt, insbesondere vollständig vernetzt, ist. Durch Eingießen der Kopplungsstelle werden mechanische Stoßbeanspruchungen und Vibrationen nur noch gedämpft auf die Kopplungsanordnung übertragen. Wenn die Vergussmasse aus demselben Immersionsmaterial wie das Immersionsmaterial für die Kopplung ist, beispielsweise ebenfalls aus Silikonkautschuk, wird in vorteilhafter Weise eine chemische Verträglichkeit der beiden Materialien erreicht, die sich nur in dem Grad der Aushärtung oder in einer Zugabe an Weichmacher im Falle des Immersionsmittels an der Kopplungsstelle unterscheiden. Außerdem sind die Ausdehnungskoeffizienten der beiden Materialien im Wesentlichen gleich groß, so dass bei Ausdehnungs- oder Schrumpfungsprozessen keine zusätzlichen Druck- oder Zugkräfte auf das Immersionsmaterial an der Kopplungsstelle ausgeübt werden. Schließlich wird durch die Vergussmasse in vorteilhafter Weise das elastomere Immersionsmaterial gegen Abfließen geschützt.

Zur Lösung der oben genannten Aufgabe ist ein Verfahren zur Kopplung von Lichtwellenleitern, beispielsweise optischen Fasern oder einem Faserarray, mit einem optischen Chip dadurch gekennzeichnet, dass
(a) ein Lichtwellenleiter beziehungsweise eine damit verbundene Ferrule auf einen Abstand von 2 bis 20µm an eine Kopplungsfläche des Chips herangeführt wird, dass
(b) ein Immersionsmaterial der oben genannten Art zubereitet wird, dass
(c) das Immersionsmaterial in einer Menge von etwa 5µl an der Kopplungsstelle abgegeben wird, und dass
(d) man das Immersionsmaterial entsprechend dem Mischungsverhältnis aushärten läßt.

Durch Einhaltung der räumlichen Beziehung zwischen der Kopplungsfläche des Lichtwellenleiters und der Kopplungsfläche des Chips, das heißt durch die Auswahl des Abstandes zwischen diesen Kopplungsflächen, wird ohne großen Aufwand bei dem Kopplungsverfahren erreicht, dass es bei einem Schrumpfungsprozess oder Ausdehnungsprozess auch während des Betriebs der Kopplungsanordnung zu einer erheblichen Risse- oder Vakuolenbildung kommt. Das Kopplungsverfahren selbst ist dabei so einfach wie beim Stand der Technik, so dass kein zusätzlicher Aufwand zur Umsetzung der Erfindung erforderlich ist. Die Einhaltung eines größeren Abstandes zwischen den Kopplungsflächen widerspricht im Übrigen der bisherigen Übung, wobei man versucht hat, die beiden Kopplungsflächen möglichst nahe beieinander anzuordnen, um die Ankopplung des Lichtstrahls von dem Lichtwellenleiter in den Chip zu verbessern. Überraschenderweise wird jedoch diese Kopplung schlechter, wenn der Abstand zwischen den Kopplungsflächen zu gering ist, weil dann andere mechanische und Spannungseinflüsse sich dahingehend auswirken, dass das Immersionsmaterial keine hinreichende optische Kopplung mehr zwischen der Faser und dem Chip herstellen kann.

Eine weitere vorteilhafte Ausgestaltung des erfindungsgemäßen Verfahrens ist dadurch gekennzeichnet, dass nach dem Aushärten des Immersionsmaterials eine Vergussmasse um die Kopplungsstelle gegossen wird, die die gleichen Bestandteile wie das Immersionsmaterial hat, jedoch härter eingestellt, insbesondere vollständig vernetzt, ist. Da das gleiche Grundmaterial zum Verguss des Bauteils und auch als Immersionsmaterial für die Kopplung verwendet wird, muss dieses Material lediglich in verschiedene Härten einstellbar sein, um sich für diesen Zweck zu eignen. Durch Verwendung des gleichen Grundmaterials werden nicht nur die oben erwähnten Vorteile erreicht, sondern auch die Lagerhaltung verbessert, da keine unterschiedlichen Materialien für die beiden Verwendungszwekke bevorratet werden müssen.

Eine vorteilhafte Ausgestaltung des erfindungsgemäßen Verfahrens ist dadurch gekennzeichnet, dass man das Immersionsmaterial beziehungsweise die Vergußmasse bei Betriebsnormaltemperatur aushärten läßt. Damit wird in vorteilhafter Weise vermieden, dass das Material bei einer Temperatur aushärtet, die sich erheblich von der Betriebsnormaltemperatur unterscheidet, so dass bereits schon dann Spannungen auf das Bauteil ausgeübt werden, wenn das Bauteil von der Produktionsstätte an die Stelle verbracht wird, wo es eingesetzt werden soll. Diese Spannungen kommen dann noch zu den "normalen" Spannungsbeanspruchungen hinzu, die dann im Betrieb des Bauteils auftreten. Wenn das ursprüngliche Aushärten des Bauteils bei der Betriebsnormaltemperatur stattgefunden hat, wird die Risse- und Vakuolenbildung auch in den Fällen am Betriebsort geringer sein, wenn sich das Bauteil zwischenzeitlich in Umgebungen mit unterschiedlichen Temperaturen befunden hat.

Eine weitere vorteilhafte Ausgestaltung des erfindungsgemäßen Verfahrens ist dadurch gekennzeichnet, dass das Immersionsmaterial, dessen Matrix einen Anteil an Flüssigphase enthält, dadurch hergestellt wird, dass ein an der Kopplungsstelle angebrachtes, voll ausgehärtetes Immersionsmaterial mit einem Weichmacher behandelt wird. Durch dieses Verfahren können in vorteilhafter Weise bereits vorhandene Kopplungsanordnungen. gegen zukünftige Risse und Vakuolenbildung geschützt werden. Mit anderen Worten wird durch Aufbringen eines geeigneten Öls oder einer anderen Weichmacherflüssigkeit auf ein ausgehärtetes Immersionsmaterial erreicht, dass das Immersionsmaterial in einen Zustand gebracht wird, der sich für die erfindungsgemäßen Zwecke eignet.

Eine weitere vorteilhafte Ausgestaltung des erfindungsgemäßen Verfahrens ist dadurch gekennzeichnet, dass als Immersionsöle aliphatische oder aromatische Öle verwendet werden. Auch bei dem nachträglichen Konditionieren des Immersionsmaterials für die Zwecke der Erfindung eignen sich diese Öle, so dass der gewünschte Zweck ohne größeren Zusatzaufwand erreicht werden kann.

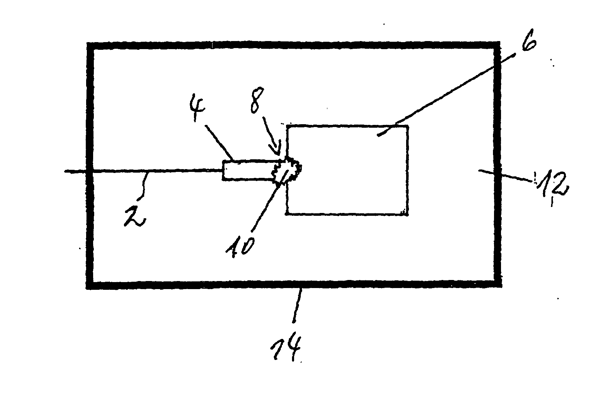

Ausführungsbeispiele der Erfindung werden nun anhand der beiliegenden Zeichnung beschrieben, in der schematisch eine Kopplungsanordnung zur Kopplung einer Lichtwellenleiterfaser mit einem optischen Bauelement/Chip dargestellt ist.

Die Figur zeigt eine Kopplungsanordnung zwischen einer in einer Ferrule 4 verankerten optischen Faser 2 und einem integrierten optischen Bauelement, das heißt einem Chip 6 mit anzukoppelnden Wellenleitern (nicht gezeigt). An der Kopplungsstelle 8 ist ein Immersionsmittel oder Immersionsgel 10 vorgesehen, dessen Volumen von etwa 5µl oder kleiner den Zwischenraum zwischen der Stirnseite der Faser 2 beziehungsweise der Ferrule 4 und der Kopplungsfläche an dem Chip 6 sowie einen diesen Kopplungsbereich umgebenen Randbereich ausfüllt. Die Teile der Kopplungsanordnung sind durch eine Vergussmasse 12 in einem Gehäuse 14 vergossen.

Das Immersionsmaterial 10 hat folgende Eigenschaften:

Es hat einen Brechungsindex zwischen 1,3 und 1,7, vorzugsweise zwischen 1,4 und 1,5.

Es ist ein transparentes Elastomer mit einer Reißdehnung über 300%. Die Reißdehnung kann durchaus bei Werten von 1000% liegen. Bei den eingangs erwähnten Kopplungsanordnungen, die eine Bewegung zwischen der Faser und dem Chip zulassen, kommen seitliche Verschiebungen zwischen den beiden Kopplungsflächen von 30 bis 40µm vor. Bei einem Abstand der beiden Kopplungsflächen von 3µm ergibt sich eine Reißdehnung von etwa 1000%.

Das Immersionsmaterial hat einen Elastizitätsmodul unter 200N/cm², vorzugsweise unter 100N/cm².

Das Immersionsmaterial hat einen Einfrierpunkt/Glasübergangspunkt T_{g} unter 0°C.

Das Immersionsmaterial hat die geforderte Weichheit beziehungsweise Klebrigkeit dadurch, dass, beispielsweise im Fall von Silikonkautschuk, das Mischungsverhältnis der beiden Komponenten zu 0,5:1 bis 0,9:1 gewählt wird. Alternativ kann ein Flüssigphasenanteil an Weichmacher oder Immersionsöl in einer Menge von 0% bis 10% der Menge des Immersionsmaterials zugegeben werden, wobei die Immersionsflüssigkeit einen niedrigen Dampfdruck hat.

Das Immersionsmittel hat eine Klebekraft je Fläche gegenüber Quarzglas von mindestens der Hälfte der Materialbruchspannung des Elastomeres.

Die Schichtdicke des Immersionsmaterials zwischen den Kopplungsflächen beträgt zwischen 2µm und 20µm, während die gesamte Länge des Immersionsmaterials pro Faserkopplung unter 5µm liegt.

Das Material der Vergussmasse ist das gleiche Grundmaterial wie das Immersionsmaterial, wobei die Vergussmasse jedoch vollständig ausgehärtet ist. Durch die Vergussmasse wird in vorteilhafter Weise das elastomere Immersionsmaterial gegen Abfließen geschützt.

### Bezugszeichenliste

- 2: optische Faser
- 4: Ferrule
- 6: Chip
- 8: Kopplungsstelle
- 10: Immersionsgel
- 12: Vergussmasse
- 14: Gehäuse

## Patentansprüche

1. Immersionsmittel (10) zum Koppeln mindestens eines Lichtwellenleiters (2) mit einem optischen Bauelement (6), wobei das Immersionsmittel (10) ein transparentes Elastomer ist,
**dadurch gekennzeichnet, dass**
die Reißdehnung des Elastomers größer als 300% und sein Elastizitätsmodul kleiner als 200 N/cm² ist.

2. Immersionsmittel (10) nach Anspruch 1,
**dadurch gekennzeichnet, dass**
die Matrix des Immersionsmittels (10) einen nicht vernetzten Anteil an Flüssigphase, einer Immersionsflüssigkeit enthält.

3. Immersionsmittel (10) nach Anspruch 2,
**dadurch gekennzeichnet, dass**
die Immersionsflüssigkeit Immersionsöl oder ein in Abhängigkeit von dem Elastomere gewählter Weichmacher ist.

4. Immersionsmittel (10) nach Anspruch 2,
**dadurch gekennzeichnet, dass**
das Immersionsmittel (10) Silikonkautschuk ist, und dass die Immersionsflüssigkeit ein Silikon-Weichmacher ist.

5. Immersionsmittel (10) nach Anspruch 4,
**dadurch gekennzeichnet, dass**
die Immersionsflüssigkeit ein Silikonöl ist.

6. Immersionsmittel (10) nach Anspruch 2,
**dadurch gekennzeichnet, dass**
das Immersionsmittel (10) Epoxyacrylat ist, und dass die Immersionsflüssigkeit ein Epoxyacrylat-Weichmacher, insbesondere Polyisobutylen, ist.

7. Immersionsmittel (10) nach Anspruch 2,
**dadurch gekennzeichnet, dass**
das Immersionsmittel (10) Urethanacrylat ist, und dass die Immersionsflüssigkeit ein Urethanacrylat-Weichmacher ist.

8. Immersionsmittel (10) nach Anspruch 7,
**dadurch gekennzeichnet, dass**
die Immersionsflüssigkeit Polyisobutylen ist.

9. Immersionsmittel (10) nach einem der vorhergehenden Ansprüche, **dadurch gekennzeichnet, dass**
der Weichmacher ein aliphatisches oder aromatisches Öl ist.

10. Immersionsmittel (10) nach Anspruch 4,
**dadurch gekennzeichnet, dass**
der Silikonkautschuk aus zwei Komponenten gemischt ist, wobei das Mischungsverhältnis der Komponenten 0,5:1 bis 0,9:1 beträgt.

11. Immersionsmittel (10) nach einem der vorhergehenden Ansprüche,
**dadurch gekennzeichnet, dass**
das Immersionsmittel (10) eine Klebekraft pro Fläche gegenüber Glas aufweist, die größer als die Hälfte der Materialbruchspannung des Elastomeres ist.

12. Immersionsmittel (10) nach einem der vorhergehenden Ansprüche,
**dadurch gekennzeichnet, dass**
der Einfrierpunkt/Glasübergangspunkt des Immersionsmittels (10) T_{g} unter 0°C liegt.

13. Immersionsmittel (10) nach einem der vorhergehenden Ansprüche,
**dadurch gekennzeichnet, dass**
der Brechungsindex des Immersionsmittels (10) 1,3 bis 1,7, insbesondere 1,4 bis 1,5, beträgt.

14. Anordnung zur Kopplung mindestens eines Lichtwellenleiters (2) mit einem optischen Bauelement (6),
**dadurch gekennzeichnet, dass**
(d) ein Immersionsmittel (10) nach einem der Ansprüche 1 bis 13 verwendet wird, dass
(e) der Abstand (d) von einer Endfläche des Lichtwellenleiters zu einer Kopplungsfläche des Bauelements 2*µ*m bis 20*µ*m beträgt, und dass
(f) das Volumen des an der Kopplungsstelle (8) angebrachten Immersionsmittels (10) kleiner als 5*µ*l ist.

15. Anordnung nach Anspruch 14, wobei die Lichtwellenleiterfaser (2) zur Kopplung in einer Ferrule (4) angeordnet ist,
**dadurch gekennzeichnet, dass**
die Ferrule (4) an ihrer Stirnseite einen reduzierten Durchmesser aufweist, und dass die Kopplungsfläche des Bauelements (6) ebenfalls reduziert ist.

16. Anordnung nach Anspruch 14 oder 15,
**dadurch gekennzeichnet, dass**
die Kopplungseinrichtung von einer Vergussmasse (12) umgeben ist, die die gleichen Bestandteile wie das Immersionsmaterial (10) hat, jedoch härter eingestellt ist.

17. Anordnung nach Anspruch 16,
**dadurch gekennzeichnet, dass**
die Vergussmasse (12) vollständig vernetzt ist.

18. Verfahren zur Kopplung mindestens eines Lichtwellenleiters (2) mit einem optischen Bauelement (6),
**dadurch gekennzeichnet, dass**
(e) ein Lichtwellenleiter (2) beziehungsweise eine damit verbundene Ferrule (4) auf einen Abstand von 2 bis 20*µ*m an eine Kopplungsfläche des Bauelements (6) herangeführt wird, dass
(f) ein Immersionsmaterial (10) nach einem der Ansprüche 1 bis 12 zubereitet wird, dass
(g) das Immersionsmaterial (10) in einer Menge von etwa 5µl an der Kopplungsstelle (8) deponiert wird, und dass
(h) man das Immersionsmaterial (10) entsprechend dem Mischungsverhältnis aushärten läßt.

19. Verfahren nach Anspruch 18,
**dadurch gekennzeichnet, dass**
nach dem Aushärten des Immersionsmaterials (10) eine Vergussmasse (12) um die Kopplungsstelle (8) gegossen wird, die die gleichen Bestandteile wie das Immersionsmaterial (10) hat, jedoch härter eingestellt ist.

20. Verfahren nach Anspruch 19,
**dadurch gekennzeichnet, dass**
die Vergussmasse (12) vollständig vernetzt ist.

21. Verfahren nach Anspruch 19,
**dadurch gekennzeichnet, dass**
man das Immersionsmaterial (10) beziehungsweise die Vergussmasse (8) bei Betriebsnormaltemperatur aushärten läßt.

22. Verfahren nach Anspruch 21,
**dadurch gekennzeichnet, dass**
das Immersionsmaterial (10), dessen Matrix einen Anteil an Flüssigphase enthält, dadurch hergestellt wird, dass ein an der Kopplungsstelle (8) angebrachtes, voll ausgehärtetes Immersionsmaterial (10) mit einem Weichmacher behandelt wird.

23. Verfahren nach Anspruch 22,
**dadurch gekennzeichnet, dass**
als Immersionsöle aliphatische oder aromatische Öle verwendet werden.

## Claims

1. An immersion agent (10) for coupling at least one optical waveguide (2) to an optical component (6), the immersion agent (10) being a transparent elastomer, **characterized in that** the elongation at tear of the elastomer is greater than 300% and its elastic modulus is smaller than 200 N/cm².

2. The immersion agent (10) as claimed in claim 1, **characterized in that** the matrix of the immersion agent (10) contains a non cross-linked proportion of a liquid phase of an immersion liquid.

3. The immersion agent (10) as claimed in claim 2, **characterized in that** the immersion liquid is immersion oil or a softener which is selected as a function of the elastomer.

4. The immersion agent (10) as claimed in claim 2, **characterized in that** the immersion agent (10) is silicone rubber and **in that** the immersion liquid is a silicone softener.

5. The immersion agent (10) as claimed in claim 4, **characterized in that** the immersion liquid is a silicone oil.

6. The immersion agent (10) as claimed in claim 2, **characterized in that** the immersion agent (10) is epoxy acrylate and **in that** the immersion liquid is an epoxy acrylate softener, in particular polyisobutylene.

7. The immersion agent (10) as claimed in claim 2, **characterized in that** the immersion agent (10) is urethane acrylate and **in that** the immersion liquid is an urethane acrylate softener.

8. The immersion agent (10) as claimed in claim 7, **characterized in that** the immersion liquid is polyisobutylene.

9. The immersion agent (10) as claimed in one of the preceding claims, **characterized in that** the softener is an aliphatic or aromatic oil.

10. The immersion agent (10) as claimed in claim 4, **characterized in that** the silicone rubber is mixed from two components, wherein the mixing ratio of the components being 0,5:1 to 0,9:1.

11. The immersion agent (10) as claimed in one of the preceding claims, **characterized in that** the immersion agent (10) has an adhesive force per unit area which in comparison with glass is greater than half the material breaking stress of the elastomer.

12. The immersion agent (10) as claimed in one of the preceding claims, **characterized in that** the freezing point/glass transition point of the immersion agent (10) T_{g} is less than 0°C.

13. The immersion agent (10) as claimed in one of the preceding claims, **characterized in that** the refractive index of the immersion agent (10) is 1,3 to 1,7, in particular 1,4 to 1,5.

14. An arrangement for coupling at least one optical waveguide (2) to an optical component (6), **characterized in that**
(d) an immersion agent (10) as claimed in one of claims 1 to 13 is used, **in that**
(e) the distance (d) between an end face of the optical waveguide and a coupling face of the component is 2 µm to 20 µm, and **in that**
(f) the volume of the immersion agent (10) applied to the coupling point (8) is less than 5µl.

15. The arrangement as claimed in claim 14, the optical waveguide fiber (2) being arranged for coupling in a ferrule (4), **characterized in that** the ferrule (4) has a reduced diameter at its front side, and **in that** the coupling face of the component (6) is also reduced.

16. The arrangement as claimed in claim 14 or 15, **characterized in that** the coupling device is surrounded by a casting compound (12) which has the same components as the immersion material (10) but is adjusted so as to be harder.

17. The arrangement as claimed in claim 16, **characterized in that** the casting compound (12) is completely cross-linked.

18. A method for coupling of at least one optical waveguide (2) to an optical component (6), **characterized in that**
(e) an optical waveguide (2) or a ferrule (4) connected thereto is moved to a distance of 2 to 20 µm from a coupling face of the component (6), **in that**
(f) an immersion material (10) as claimed in one of claims 1 to 12 is prepared, **in that**
(g) the immersion material (10) is deposited at the coupling point (8) to a quantity of approximately 5 µl, and **in that**
(h) the immersion material (10) is allowed to harden in accordance with the mixing ratio.

19. The method as claimed in claim 18, **characterized in that**, after the hardening of the immersion material (10), a casting compound (12) which has the same components as the immersion material (10) but is adjusted so as to be harder, is cast around the coupling point (8).

20. The method as claimed in claim 19, **characterized in that** the casting compound (12) is completely cross-linked.

21. The method as claimed in claim 19, **characterized in that** the immersion material (10) or the casting compound (8) is allowed to harden at normal operating temperature.

22. The method as claimed in claim 21, **characterized in that** the immersion material (10) whose matrix contains a proportion of a liquid phase is manufactured **in that** a completely hardened immersion material (10) which is applied to the coupling point (8) is treated with a softener.

23. The method as claimed in claim 22, **characterized in that** aliphatic or aromatic oils are used as immersion oils.

## Revendications

1. Agent d'immersion (10) pour le couplage d'au moins un guide d'ondes optiques (2) avec un composant optique (6), l'agent d'immersion (10) étant un élastomère transparent, **caractérisé en ce que** l'allongement à la rupture de l'élastomère est supérieur à 300% et son module d'élasticité est inférieur à 200 N/cm².

2. Agent d'immersion (10) selon la revendication 1, **caractérisé en ce que** la matrice de l'agent d'immersion (10) contient une fraction non réticulée en phase liquide d'un liquide d'immersion.

3. Agent d'immersion (10) selon la revendication 2, **caractérisé en ce que** le liquide d'immersion est une huile d'immersion ou un plastifiant choisi en fonction de l'élastomère.

4. Agent d'immersion (10) selon la revendication 2, **caractérisé en ce que** l'agent d'immersion (10) est un caoutchouc de silicone et **en ce que** le liquide d'immersion est un plastifiant de silicone.

5. Agent d'immersion (10) selon la revendication 4, **caractérisé en ce que** le liquide d'immersion est une huile de silicone.

6. Agent d'immersion (10), selon la revendication 2, **caractérisé en ce que** l'agent d'immersion (10) est un époxyacrylate et **en ce que** le liquide d'immersion est un plastifiant d'époxyacrylate, en particulier le polyisobutylène.

7. Agent d'immersion (10) selon la revendication 2, **caractérisé en ce que** l'agent d'immersion (10) est un acrylate d'uréthanne et **en ce que** le liquide d'immersion est un plastifiant d'acrylate d'uréthanne.

8. Agent d'immersion (10) selon la revendication 7, **caractérisé en ce que** le liquide d'immersion est le polyisobutylène.

9. Agent d'immersion (10) selon l'une quelconque des revendications précédentes, **caractérisé en ce que** le plastifiant est une huile aliphatique ou aromatique.

10. Agent d'immersion (10) selon la revendication 4, **caractérisé en ce que** le caoutchouc de silicone est un mélange de deux composants dont le rapport de mélange des composants est de 0,5:1 à 0,9:1.

11. Agent d'immersion (10) selon l'une quelconque des revendications précédentes, **caractérisé en ce que** l'agent d'immersion (10) présente une force d'adhérence surfacique par rapport au verre, qui est supérieure à la moitié de la contrainte de rupture de l'élastomère.

12. Agent d'immersion (10) selon l'une quelconque des revendications précédentes, **caractérisé en ce que** la température de transformation ou le point de transition vitreuse Tg de l'agent d'immersion (10) se situe en dessous de 0°C.

13. Agent d'immersion (10) selon l'une quelconque des revendications précédentes, **caractérisé en ce que** l'indice de réfraction de l'agent d'immersion (10) est de 1,3 à 1,7, en particulier de 1,4 à 1,5.

14. Dispositif de couplage d'au moins un guide d'ondes optiques (2) avec un composant optique (6),
**caractérisé en ce que**
(d) on utilise un agent d'immersion (10) selon l'une quelconque des revendications 1 à 13,
(e) la distance (d) d'une face d'extrémité du guide d'ondes optiques à une face de couplage du composant est de 2 µm à 20 µm, et
(f) le volume de l'agent d'immersion (10) appliqué au point de couplage (8) est inférieur à 5 µl.

15. Dispositif selon la revendication 14, dans lequel la fibre (2) du guide d'ondes optiques est aménagée pour le couplage dans une douille (4), **caractérisé en ce que** la douille (4) présente sur sa face frontale un diamètre réduit et **en ce que** la face de couplage du composant (6) est également réduite.

16. Dispositif selon la revendication 14 ou 15, **caractérisé en ce que** le dispositif de couplage est entouré d'une masse de scellage (12) possédant les mêmes composants que le matériau d'immersion (10), mais qui est ajustée à un niveau de dureté plus élevé.

17. Dispositif selon la revendication 16, **caractérisé en ce que** la masse de scellage (12) est complètement réticulée.

18. Procédé de couplage d'au moins un guide d'ondes optiques (2) avec un composant optique (6), **caractérisé en ce que**
(e) un guide d'ondes optiques (2) ou une douille (4) qui lui est raccordée est amené(e) à une distance de 2 à 20 µm d'une face de couplage du composant (6),
(f) un matériau d'immersion (10) est préparé selon l'une quelconque des revendications 1 à 12,
(g) le matériau d'immersion (10) est déposé au point de couplage en quantité (8) d'environ 5 *µ*l, et
(h) on fait durcir le matériau d'immersion (10) en fonction du rapport de mélange.

19. Procédé selon la revendication 18, **caractérisé en ce que**, après durcissement du matériau d'immersion (10), on coulé autour du point de couplage (8) une masse de scellage (12) qui possède les mêmes composants que le matériau d'immersion (10), mais qui est ajustée à un niveau de dureté plus élevé.

20. Procédé selon la revendication 19, **caractérisé en ce que** la masse de scellage (12) est complètement réticulée.

21. Procédé selon la revendication 19, **caractérisé en ce que** l'on fait durcir le matériau d'immersion (10) ou la masse de scellage (8) à température normale de fonctionnement:

22. Procédé selon la revendication 21, **caractérisé en ce que** le matériau d'immersion (10), dont la matrice contient une fraction en phase liquide, est fabriqué en traitant avec un plastifiant un matériau d'immersion (10) appliqué au point de couplage (8) et complètement durci.

23. Procédé selon la revendication 22, **caractérisé en ce que** des huiles aliphatiques ou aromatiques sont utilisées comme huiles d'immersion.
